Europäisches Patentamt

European Patent Office

Office européen des brevets

(19)

(11) Veröffentlichungsnummer: **0 056 592**
**B1**

(12) **EUROPÄISCHE PATENTSCHRIFT**

(45) Veröffentlichungstag der Patentschrift:
18.07.84

(21) Anmeldenummer: 82100111.2

(22) Anmeldetag: 09.01.82

(51) Int. Cl.³: **B 32 B 5/08**, D 03 D 11/00,
**B 32 B** 27/12

(54) Formstabiles Verbundmaterial und Verfahren zu seiner Herstellung.

(30) Priorität: 15.01.81 DE 3101022

(43) Veröffentlichungstag der Anmeldung:
28.07.82 Patentblatt 82/30

(45) Bekanntmachung des Hinweises auf die Patenterteilung:
18.07.84 Patentblatt 84/29

(84) Benannte Vertragsstaaten:
DE FR GB IT

(56) Entgegenhaltungen:
DE - A - 1 535 736
DE - A - 2 143 982
DE - A - 2 855 194
US - A - 3 481 427
US - A - 3 966 522

Die Akte enthält technische Angaben, die nach dem Eingang der Anmeldung eingereicht wurden und die nicht in dieser Patentschrift enthalten sind.

(73) Patentinhaber: HOECHST AKTIENGESELLSCHAFT,
Postfach 80 03 20, D-6230 Frankfurt am Main 80 (DE)

(72) Erfinder: Disselbeck, Dieter, Am Rehsteig 3, D-6232 Bad Soden am Taunus (DE)
Erfinder: Stahl, Dieter, Am Mühlbach 24, D-6239 Kriftel (DE)

## Beschreibung

Die Erfindung betrifft ein formstabiles Verbundmaterial, bestehend aus einem Doppelgewebe mit Abstandhalterfäden, welches auf beiden Seiten mit einer Kunststoffschicht versehen ist, sowie ein Verfahren zu seiner Herstellung.

Für Bauteile mit hoher Festigkeit und geringem Gewicht, deren Verformung jedoch eine geringere Rolle spielt, werden in zunehmendem Maße faserverstärkte Kunststoffe als Verbundmaterial mit Vorteil eingesetzt. Diese Verbundmaterialien bestehen üblicherweise aus verschiedenen Schichten eines Kernmaterials — wie Fasermatten, Hartschaum, Kork, Aluminium, Kunststoff- oder Pappwaben und einem ausgehärteten Kunstharz. Sie werden nach den bekannten Methoden im Handauflegeverfahren oder mittels Heiß- oder Kaltpreßverfahren diskontinuierlich hergestellt. Hierbei werden die einzelnen Komponenten des Verbundmaterials, wie z. B. Fasermatten und Aluminiumwabenkern und härtbares Harz schichtweise in die Form eingelegt. Durch leichtes Pressen wird der Verbund der einzelnen Schichten miteinander bewirkt.

Wichtig ist es dabei, die zwischen den einzelnen Schichten eingeschlossene Luft vollständig zu entfernen, da anderenfalls der Haftverbund zwischen den einzelnen Schichten nicht gewährleistet ist und die Festigkeit des Bauteils beeinträchtigt wird. Darüber hinaus wirkt sich eingeschlossene Luft nachteilig auf die Lichtstabilität, das Langzeitverhalten und das äußere Erscheinungsbild des Bauteils aus.

Werden höhere Preßdrücke zur Entfernung der Luft und zur Intensivierung des Haftverbundes angewandt, so besteht die Gefahr, daß das Kernmaterial beschädigt wird und die mechanischen Eigenschaften des Bauteils nicht mehr ausreichen.

Weiterhin weisen die bekannten Kernmaterialien den Nachteil auf, daß sie kaum dreidimensional verformbar sind und die Herstellung komplizierterer Formteile in Sandwich-Bauweise in einem Preßvorgang nicht möglich ist. Weiterhin ist es auch schwierig, die Formstabilität bei Verbundwerkstoffen in den Griff zu bekommen. Durch die unterschiedlichen Ausdehnungskoeffizienten der verwendeten verschiedenen Materialien und das unterschiedliche Schwindverhalten führen Spannungen zu einer Veränderung der geometrischen Form, wie beispielsweise zur sogenannten Schüsselbildung.

Aus der DE-A-1 535 736 sind gewebte Füllplatten bekannt, welche aus Doppelgeweben bestehen, deren Ober- und Untergewebe durch Zwischengewebe miteinander verbunden sind. Ober-, Zwischen- und Untergewebe sind biegsam. Die fertigen Gewebe können mit Harz bestrichen und durch Einwirkung von Druck und Wärme verfestigt werden und kann zur Herstellung von Füllplatten dienen oder es können direkt geformte Radarzubehörteile aus ihnen erzeugt werden. Weiterhin können die Zwischenräume zwischen Ober- und Untergewebe teilweise oder vollständig mit Plastikschaum oder ähnlichem Material ausgefüllt werden.

Die DE-A-2 855 194 beschreibt eine Bauplatte, welche aus einem gewebten Tragwerk und einem Kernmateial, beispielsweise Zement, Gips, Kalk, besteht, welches das gewebte Tragwerk ausfüllt. Hier gibt das eingefüllte Kernmaterial die Steifigkeit und Festigkeit.

Auch diese bekannten Verbundmaterialien weisen noch den Nachteil auf, daß die Festigkeit der Verbindung zwischen Ober- und Untergewebe im Bezug auf Druckbelastungen unzureichend ist, und daß die Luft während des Beschichtens und während des Aushärtens des aufgestrichenen Harzes nur schwierig zwischen Ober- und Untergewebe entweichen kann.

Aufgabe der Erfindung ist es deshalb, Verbundmaterialien für Leichtbauelemente in Sandwich-Bauweise zur Verfügung zu stellen, die die genannten Nachteile nicht aufweisen und deren Herstelung problemlos und auch kontinuierlich erfolgen kann.

Die Aufgabe wurde für ein formstabiles Verbundmaterial der eingangs erwähnten Art dadurch gelöst, daß Ober- und Untergewebe des Doppelgewebes über eingewebte steife Filamente miteinander verbunden sind, welche ein Zusammendrücken des Doppelgewebes verhindern, und daß Ober- und Untergewebe mit einem ausgehärteten Laminat versehen sind. Vorzugsweise sind die steifen Filamente Monofilamente. Bevorzugt bestehen sowohl Ober- als auch Untergewebe als auch die steifen Filamente aus Polyestern, polyamiden, Glas, Kohlenstoff und/oder Metallen. In einer weiteren vorzugsweisen Ausführungsform des erfindungsgemäßen Verbundmaterials besteht das Laminat aus einer oder mehreren mit Kunstharz durchtränkten Fasermatten. Vorteilhaft weist die äußere Fasermatte eine dekorative Oberfläche auf.

Das erfindungsgemäße formstabile Verbundmaterial wird nach einem Verfahren erhalten, bei dem das Doppelgewebe, dessen Ober- und Untergewebe über eingewebte steife Filamente miteinander verbunden sind, als Kernmaterial beidseits mit jeweils einer oder mehreren Kunstharz-getränkten Fasermatten zusammengeführt wird, und bei dem danach durch Anpreßdruck das Doppelgewebe mit den Fasermatten verbunden wird. Vorteilhaft ist es, dem Doppelgewebe gleichzeitig mit den Fasermatten auf deren Außenseite je eine Trennfolie zuzuführen. Es ist günstig, den Anpreßdruck durch ein Walzenpaar zu erzeugen, durch welches Doppelgewebe und Fasermatten laufen. Ebenfalls hat es sich bewährt, daß Doppelgewebe zunächst mit einer Kunstharzlösung zu tränken, dann heiß zu verformen und danach allseitig mit aushärtbaren Schichten zu versehen, welche sodann gehärtet werden.

Die zur Herstellung des erfindungsgemäßen formstabilen Verbundmaterials verwendeten Doppelgewebe sowie ihre Herstellung sind bekannt. Wesentlich ist dabei, daß nach der Erfindung steife Filamente als Abstandhalterfäden Verwendung finden, d. h. solche, die genügend Festigkeit gegenüber Druckbelastung bewirken, so daß Ober- und Untergewebe unter üblichen Belastungen, beispielsweise der Verarbeitung nicht zusammengedrückt werden können. Somit können als Abstandhalterfäden entweder steife Multifilamente, bevorzugt aber Monofilamente eingesetzt werden.

Diese Filamente sind entweder einzeln oder auch in gewebter Form als Abstandhalterfäden im Doppelgewebe enthalten. Sie sind sowohl mit dem Ober- als auch mit dem Untergewebe verwebt.

Das auf der Ober- und Unterseite des Doppelgewebes mit Abstandhalterfäden befindliche Laminat besteht in bevorzugter Ausführung aus einer oder mehreren mit einem Kunstharz getränkten Fasermatten, wobei vorzugsweise duromere Kunstharze, wie ungesättigte Polyesterharze, Epoxidharze, Methacrylatharze, Melaminharze oder Furanharze zum Einsatz kommen. Das Laminat kann auch ein bedrucktes oder strukturiertes Vlies enthalten, um besondere optische Effekte zu erzielen.

In einer weiteren Ausführungsform ist die Kunstharzschicht ohne Faserverstärkung jeweils mit der Ober- bzw. Unterseite des Doppelgewebes mit Abstandhalterfäden verbunden.

Sowohl Ober- als auch Untergewebe als auch die steifen Filamente bestehen vorteilhaft aus Polyestern, Polyamiden, Glas, Kohlenstoff oder auch aus Metall.

Als äußere Fasermatte können sämtliche textilen Flächengebildet eingesetzt werden, wie z. B. Gewebe, Gewirke, Gelege oder Vliese. Wenn dies für das formstabile Verbundmaterial gewünscht wird, gibt man der äußeren Fasermatte eine dekorative Oberfläche, beispielsweise eine Färbung o. ä.

Das erfindungsgemäße formstabile Verbundmaterial aus einem Doppelgewebe mit Abstandhalterfäden wird dadurch erhalten, daß man das Doppelgewebe, dessen Ober- und Untergewebe über eingewebte steife Filamente miteinander verbunden sind, als Kernmaterial beidseitig mit jeweils mindestens einer Kunstharz-getränkten Fasermatte zusammenführt, und daß danach durch Anpreßdruck das Doppelgewebe mit den Fasermatten verbunden wird. Dieses Verfahren wird insbesondere unter Zuhilfenahme von Trennfolien ausgeübt, die gleichzeitig mit den Fasermatten auf deren Außenseite dem Doppelgewebe zugeführt werden. Dadurch wird erreicht, daß das Verbundmaterial eine besonders glatte Oberfläche hat, und daß es sich ohne Komplikationen von den Anpreßvorrichtungen löst, die die Verbindung des Doppelgewebes mit den Fasermatten bewirken, beispielsweise also von den Anpreßwalzen. Besonders bevorzugt ist ein Verfahren nach welchem das Doppelgewebe zunächst mit einer Kunstharzlösung getränkt, dann heizverformt und erst danach allseitig mit aushärtbaren Schichten versehen wird, die danach ausgehärtet werden. Durch dieses Verfahren ist es möglich, formstabile Verbundmaterialien in beliebiger dreidimensionaler Form zu erhalten.

Das erfindungsgemäße Verbundmaterial ist verwindungssteif und verzugsfrei, da das Doppelgewebe mit Abstandhalterfäden die Funktion eines Tragwerks übernimmt. Ober- und Untergewebe als Untergurt, sowie die Abstandhalterfäden als Ausfachung nehmen Spannungen, die insbesondere aufgrund unterschiedlicher Längenausdehnungskoeffizienten und des unterschiedlichen Schwindverhaltens auftreten, in jeder Richtung auf.

Ein wesentlicher technicher Fortschritt bei der Herstellung der erfindungsgemäßen Verbundmaterialien ist insbesondere darin zu sehen, daß die Luft beim Auftrag der Laminate nicht zwischen Gewebe und Laminat eingeschlossen wird, sondern durch den vom Ober- und Untergewebe des Doppelgewebes gebildeten Zwischenraum fortgeleitet wird.

Damit können aufwendige Vakuumherstellverfahren entfallen und es ist eine kontinuierliche Herstellung von plattenförmigen oder von profilierten Verbundmaterialien möglich.

Das so hergestellte Verbundmaterial weist eine brilliante einwandfreie Oberfläche auf und eignet sich für den Einsatz als Leichtbauelement, beispielsweise im Fahrzeugbau, im Flugzeug- und im Bootsbau. Für den Bausektor können transluzente wärmedämmende Verbundplatten (z. B. Lichtkuppeln, Gewächshäuser) zur Verfügung gestellt werden. Zur Herstellung von Verbundmaterialien in Sandwich-Bauweise mit komplizierter Formgebung wird das zunächst flexible Doppelgewebe mit Abstandhalterfäden vorzugsweise mit einer wässigen Phenolharzlösung getränkt, anschließend heiß verformt, und der so erhaltene Vorformling wird mit aushärtbaren Laminaten belegt.

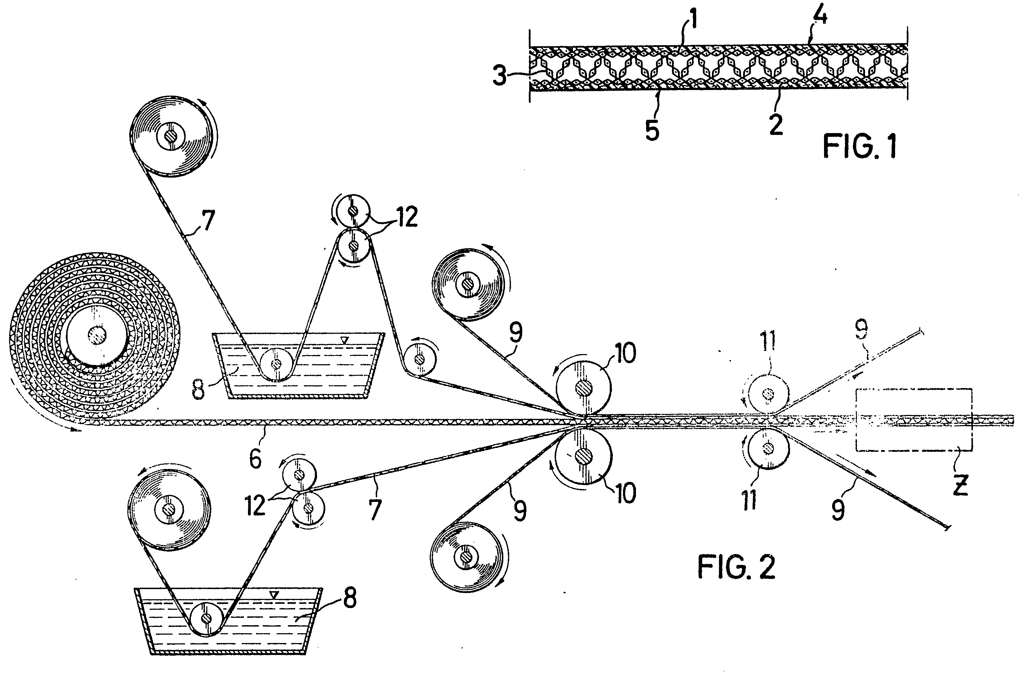

Fig. 1 stellt eine Vergrößerung des Ausschnittes Z aus Fig. 2 dar und zeigt den Aufbau des erfindungsgemäßen Verbundmaterials. Fig. 2 zeigt schematisch die Herstellung des formstabilen Verbundmaterials. In den Figuren bedeutet:

| 1 | das Obergewebe, |
| 2 | das Untergewebe, |
| 3 | die Abstandhalterfäden, |
| 4 | das obere Laminat und |
| 5 | das untere Laminat, |
| 6 | das Doppelgewebe, |
| 7 | Fasermatten, |
| 8 | Kunstharzbad, |
| 9 | Trennfolie, |
| 10 | Druckwalzen, |
| 11 | Transportwalzen, |
| 12 | Abquetschwalzen. |

## Patentansprüche

1. Formstabiles Verbundmaterial, bestehend aus einem Doppelgewebe (6) mit Abstandhalterfäden (3), welches auf beiden Seiten mit einer Kunststoffschicht versehen ist, dadurch gekennzeichnet, daß Ober- und Untergewebe (1, 2) des Doppelgewebes über eingewebte steife Filamente miteinander verbunden sind, welche ein Zusammendrücken des Doppelgewebes verhindern, und daß Ober- und Untergewebe mit einem ausgehärteten Laminat (4, 5) versehen sind.

2. Formstabiles Verbundmaterial nach Anspruch 1, dadurch gekennzeichnet, daß die steifen Filamente Monofilamente sind.

3. Formstabiles Verbundmaterial nach Ansprüchen 1 und 2, dadurch gekennzeichnet, daß sowohl Ober- als auch Untergewebe (1, 2) als auch die steifen Filamente aus Polyestern, Polyamiden, Glas, Kohlenstoff und/oder Metall bestehen.

4. Formstabiles Verbundmaterial nach Ansprüchen 1—3, dadurch gekennzeichnet, daß das Laminat (4, 5) aus einer oder mehreren mit Kunstharz durchtränkten Fasermatten (7) besteht.

5. Formstabiles Verbundmaterial nach Anspruch 4, dadurch gekennzeichnet, daß die äußere Fasermatte eine dekorative Oberfläche aufweist.

6. Verfahren zum Herstellen eines formstabilen Verbundmaterials aus einem Doppelgewebe mit Abstandhalterfäden, welches auf beiden Seiten mit einer Kunststoffschicht versehen wird, dadurch gekennzeichnet, daß das Doppelgewebe, dessen Ober- und Untergewebe über eingewebte steife Filamente miteinander verbunden sind, als Kernmaterial beidseits mit jeweils einer oder mehreren kunstharz-getränkten Fasermatten zusammengeführt wird, und daß danach durch Anpreßdruck das Doppelgewebe verbunden wird.

7. Verfahren nach Anspruch 6, dadurch gekennzeichnet, daß dem Doppelgewebe gleichzeitig mit den Fasermatten auf deren Außenseite je eine Trennfolie zugeführt wird.

8. Verfahren nach Ansprüchen 6 und 7, dadurch gekennzeichnet, daß der Anpreßdruck durch ein Walzenpaar erzeugt wird, durch welches Doppelgewebe und Fasermatten laufen.

9. Verfahren nach Ansprüchen 6 und 7, dadurch gekennzeichnet, daß das Doppelgewebe zunächst mit einer Kunstharzlösung getränkt, dann heiß verformt und danach allseitig mit aushärtbaren Schichten versehen wird, welche sodann gehärtet werden.

## Claims

1. Dimensionally stable composite material consisting substantially of a double fabric (6) containing spacer filaments (3) and provided on both sides with a plastics layer, wherein the face (1) and the back (2) the double fabric are linked with each other by means of rigid filaments preventing the double fabric to be squeezed, and face and back fabric each are provided with a cured laminate (4, 5).

2. The dimensionally stable composite material as claimed in claim 1, wherein the rigid filaments are monofilaments.

3. The dimensionally stable composite material as claimed in claims 1 and 2, wherein face and back fabric (1, 2) and the rigid filaments are made from polyester, polyamides, glass, carbon, and/or metal.

4. The dimensionally stable composite material as claimed in claims 1 to 3, wherein the laminate (4, 5) consists substantially of one or more fiber mats (7) impregnated with synthetic resin.

5. The dimensionally stable composite material as claimed in claim 4, wherein the exterior fiber mat has a decorative surface.

6. Process for the manufacture of a dimensionally stable composite material consisting substantially of a double fabric containing spacer filaments and provided on both sides with a plastics layer, which somprises joining on both sides the double fabric the face and back of which are linked with each other by mens of incorporated rigid filaments and which serves as core material with one or more fiber mats impregnated with synthetic resin, and bonding then the double fabric to the fiber mats by compression.

7. The process as claimed in claim 6, which comprises joining the double fabric simultaneously with the fiber mats with a separating sheet each which is positioned on the outer face of the fiber mats.

8. The process as claimed in claims 6 and 7, which comprises producing the compression by a pair of rollers through the gap of which the double fabric and the fiber mats are passed.

9. The process as claimed in claims 6 and 7, which comprises impregnating first the double fabric with a solution of a synthetic resin, molding it subsequently and providing it then on both sides with curable layers which are cured thereafter.

## Revendications

1. Matériau composite indéformable, constitué d'un double tissu (6) avec fils d'écartement (3), lequel est pourvu des deux côtés d'une couche de matière plastique, caractérisé en ce que le tissu supérieur et le tissu inférieur (1, 2) du double tissu sont relis l'un à l'autre par des filaments rigides entrelacés, que empêchent un écrasement du double tissu, et en ce que le tissu supérieur et le tissu inférieur sont garnis d'un stratifié durci (4, 5).

2. Matériau composite indéformable selon la revendication 1, caractérisé en ce que les filaments rigides sont des monofilaments.

3. Matériau composite indéformable selon les revendications 1 ou 2, caractérisé en ce que tant le tissu supérieur et inférieur (1, 2) que les filaments rigides sont en polyesters, polyamides, verre, carbone et/ou métal.

4. Matériau composite indéformable selon les revendications 1 à 3, caractérisé en ce que le stratifié (4, 5) est constitué d'un ou plusieurs mats de fibres (7) imprégnés d'une résine synthétique.

5. Matériau composite indéformable selon la revendication 4, caractérisé en ce que le mat de fibres extérieur présente une surface décorative.

6. Procédé pour la fabrication d'un matériau composite indéformable constitué d'un double tissu avec fils d'écartement, lequel est pourvu des deux côtés d'une couche de matière plastique, caractérisé en ce que le double tissu, dont le tissu supérieur et le tissu inférieur sont reliés l'un à l'autre par des filaments rigides entrelacés, est, en tant que matériau d'âme, réuni des deux côtés à un ou plusieurs mats de fibres imprégnés d'une résine synthétique, puis que le double tissu est assemblé par und pression de serrage.

7. Procédé selon la revendication 6, caractérisé en ce qu'une feuille de séparation est amenée au double tissu en même temps qu'aux mats de fibres, sur chacune de leurs faces extérieures.

8. Procédé selon les revendications 6 et 7, caractérisé en ce que la pression de serrage est produite par une paire de cylindres à travers lesquels passent le double tissu et les mats de fibres.

9. Procédé selon les revendications 6 et 7, caractérisé en ce que le double tissu est imprégné d'abord d'une solution de résine synthétique, puis formé à chaud et enfin garni sur toutes ses faces de couches durcissables, lesquelles sont ensuite durcies.

FIG.1

FIG. 2